# EUROPÄISCHE PATENTSCHRIFT

(11) **EP 0 406 922 B1**
(45) Veröffentlichungstag und Bekanntmachung des Hinweises auf die Patenterteilung: **02.11.1994**
(21) Anmeldenummer: 90117595.0
(22) Anmeldetag: 02.12.1988
(51) Int. Cl.: B66C 9/08, B66C 9/14, F16C 13/00

(54) **Radblock**
Wheel unit
Bloc de roue

(30) Priorität: 04.12.1987 DE 3741193
(43) Veröffentlichungstag der Anmeldung: 09.01.1991
(62) Teilanmeldung aus: 88120175.0
(73) Patentinhaber: MAN GHH LOGISTICS GMBH, 74076 Heilbronn (DE)
(72) Erfinder: Bröring, Wolfgang, D-8011 Poing (DE); Gleixner, Franz, D-8000 München 70 (DE); Gschlössl, Georg, D-8016 Feldkirchen (DE); Häring, Elmar, D-8000 München 60 (DE); Kleinert, Bolko, D-4235 Schermbeck-Damm (DE); Lehmann, Peter, D-8015 Markt Schwaben (DE); Schulz, Hartmut, D-8209 Stephanskirchen (DE); Wagner, Gerhard, Dr., D-5802 Wetter 2 (DE)
(74) Vertreter: Liska, Horst, Dr.-Ing.

(56) Entgegenhaltungen:
- AT-B- 374 159
- DE-A- 2 319 187
- DE-A- 2 842 417
- DE-A- 2 922 407
- DE-C- 3 134 750
- GB-A- 2 052 014

## Beschreibung

Die Erfindung betrifft einen Radblock mit einem aus mehreren fest miteinander verbundenen, insbesondere verschweißten Blechformteilen zusammengesetzten Gehäuse, dessen einander gegenüberliegende Seitenwände in das Gehäuseinnere vorstehende, ringzylindrische Lageransätze bilden und mit einem die Lageransätze axial überlappenden, über Wälzlager an den Lageransätzen drehbar gelagerten Laufrad, welches über die Wälzlager in dem Gehäuse axial fixiert ist.

Ein Radblock dieser Art ist aus der DE-PS 31 34 750 bekannt. Sein Gehäuse besteht aus zwei aus Blech gepreßten Schalen, die in der Längsmittelebene des Gehäuses miteinander verschweißt sind. Das Laufrad hat eine Hohlnabe, die einteilig mit einem Laufradkranz über eine Radscheibe verbunden ist. Die mit einer Innenverzahnung für die Kupplung mit einem Antrieb versehene Hohlnabe bildet Achszapfen, die in die Lageransätze des Gehäuses eingreifen und dort mittels Wälzlager drehbar gelagert sind. Die axiale Fixierung erfolgt einerseits über Ringschultern an den Achszapfen und den Lageransätzen und andererseits über zusätzliche an den Achszapfen angebrachte Sicherungsringe. Bei dem bekannten Radblock ist der Herstellungsaufwand für das Laufrad und dessen axiale Fixierung vergleichsweise groß.

Aus der DE-OS 23 19 187 ist ein weiterer Radblock bekannt, bei welchem das von einem Gehäuse umschlossene Laufrad an Steckachsen gelagert ist, die von gegenüberliegenden Seiten des Gehäuses her in Lageröffnungen des Laufrads eingreifen und das Laufrad über Wälzlager tragen. Bei den Steckachsen handelt es sich um vom Gehäuse gesondert hergestellte und an diesem angeschraubte Bauelemente. Zwischen den Steckachsen hat das Laufrad einen scheibenförmigen, mit einer Innenverzahnung für den Eingriff einer Antriebswelle versehenen Mittelsteg. Auch bei diesem Radblock ist der Konstruktionsaufwand für das Laufrad und insbesondere für die Steckachsen vergleichsweise groß.

Bei dem aus der DE-PS 31 34 750 bekannten Radblock besteht das Gehäuse aus zwei Blechschalen, die jeweils eine der Seitenwände und die Hälfte der in der Längsmitte geteilten Umfangswand bilden. Ein solches Gehäuse hat Wände einheitlicher Blechdicke, wobei die Blechdicke aufgrund des Herstellungsverfahrens begrenzt ist, so daß sich für manche Anwendungsfälle nur eine unzureichende Gehäusefestigkeit ergibt. Ferner ist bei dem bekannten Radblock der axiale Abstand der Wälzlager durch die Abmessungen der Gehäuseschalen vorgegeben. Toleranzen zwischen der gehäuseseitigen Fixierung der Wälzlager und der laufradseitigen Fixierung werden im Bereich der an den Achszapfen des Laufrads vorgesehenen Sicherungsringe ausgeglichen. Dies erhöht die Toleranzanforderungen bei der Herstellung des Radblocks.

Es ist Aufgabe der Erfindung, einen Radblock mit einem einfach herzustellenden und denoch stabilen Gehäuse zu schaffen.

Bei dem Radblock gemäß der Erfindung greifen die von den Seitenwänden abstehenden Lageransätze wiederum in eine Lageröffnung des Laufrads. Anders als bei den aus der DE-PS 31 34 750 bekannten Radblock ist das Gehäuse jedoch aus zwei Seitenwandscheiben und einem im wesentlichen U-förmigen Umfangswandteil zusammengesetzt, welches entlang seiner Längsränder mit den Rändern der Seitenwandscheiben verbunden, insbesondere verschweißt ist. Auf diese Weise kann beim Anfügen der Seitenwandscheiben axiales Spiel des Laufrads ausgeglichen werden. Zweckmäßigerweise hat zumindest eine der Seitenwandscheiben umgebogene Ränder, die mit der Flachseite des Umfangswandteils überlappen, so daß auch verhältnismäßig große Toleranzen justiert werden können. Da das Umfangswandteil von den Seitenwandscheiben gesondert hergestellt wird, kann es problemlos auch aus einem dickeren Blech als die Seitenwandscheiben gefertigt werden, so daß der Radblock auch erhöhten Festigkeitsanforderungen an sein Gehäuse selbst dann genügt, wenn der Radblock im Bereich seiner Umfangswand mit dem Laufwerk verbunden wird. Die Festigkeit des Gehäuses kann weiterhin dadurch erhöht werden, daß das Umfangswandteil bei im wesentlichen rechtwinklig-viereckigen Seitenwandscheiben um alle vier Ecken der Seitenwandteile herumgreift. Das Gehäuse erhält damit eine bis auf einen vergleichsweise kleinen Ausschnitt für den Durchtritt des Laufrads geschlossene Kastenform.

In einer Variante des vorstehend erläuterten Radblocks besteht das Gehäuse aus zwei mit den Lageransätzen versehenen Seitenwandteilen und zwei die Seitenwandteile entlang deren Hochränder miteinander verbindenden Stirnwandteilen. Die Stirnwandteile haben sich gegenüberliegende, über das Laufrad greifende Abwinkelungen, und sind längs der Abwinkelungen miteinander verbunden. Eine solche Konstruktion läßt sich besonders leicht herstellen und hat insbesondere den Vorteil, daß sie sich an jeder ihrer Seiten, insbesondere aber auch stirnseitig an die Konstruktion des Krans oder dergleichen anschließen läßt. Für die stirnseitige Anschließung können die Stirnwandteile mit einer unter die Seitenwandteile greifenden Abwinkelung versehen werden, die mit den unteren Längsrändern der Seitenwandteile verschweißt werden kann. Die Abwinkelung der Stirnwandteile vermag dann im Betrieb auftretende Zugkräfte in die Stirnwandteile und damit die Krankonstruktion abzuleiten. Die Stirnwandteile können zu diesem Zweck gegebenenfalls auch aus einem dickeren Blech gefertigt sein als die Seitenwandteile. Die Stirnwandteile stehen zweckmäßigerweise über die Seitenwandteile in Achsrichtung des Laufrads vor, so daß der Radblock in diesen Bereichen problemlos an der Krankonstruktion befestigt werden kann.

Ein weiterer Aspekt der Erfindung, der in den Ansprüchen 8 bis 10 wiedergegeben ist, betrifft die Verbindung des Radblocks mit dem insbesondere als Getriebemotor ausgebildeten Antriebsmotor. Um den über eine außenverzahnte Welle drehfest mit dem Laufrad gekuppelten Antriebsmotor möglichst einfach montieren und demontieren zu können, ist vorgesehen, daß die axiale Fixierung des Motors relativ zum Laufrad und damit relativ zum Gehäuse des Radblocks ausschließlich über die Welle erfolgt. Die in das Laufrad einsteckbare Welle ist hierfür mit abnehmbaren Sicherungsorganen, beispielsweise Sprengringen oder dergleichen, versehen. Das Reaktionsdrehmoment des Motors wird von Steckzapfen aufgenommen, die einander sich gegenüberliegende Wände des Radblockgehäuses und des Antriebsgehäuses miteinander kuppeln. Es versteht sich, daß der Begriff "Wand" auch Flansche oder dergleichen des Gehäuses sowohl des Radblocks als auch des Motors oder dessen Getriebes umfaßt. In einer bevorzugten Ausgestaltung haben die sich gegenüberliegenden Wände des Radblocks und des Motors axial miteinander fluchtende Öffnungen, in welchen die Steckzapfen sitzen. Die Steckzapfen haben zur axialen Fixierung zwischen den sich gegenüberliegenden Wänden des Radblocks und des Antriebs radiale Vorsprünge, beispielsweise in Form eines Ringbunds. Die Öffnungen können zur Dämpfung von Schwingungen und zum Ausgleich von Toleranzen mit elastischen Manschetten oder dergleichen ausgekleidet sein.

In folgenden werden Ausführungsbeispiele der Erfindung anhand einer Zeichnung näher erläutert. Hierbei zeigt:
- Fig. 1: einen Radblock für ein auf Schienen laufendes Laufwerk zum Beispiel eines Krans oder einer verfahrbaren Plattform oder dergleichen;
- Fig. 2: eine Schnittansicht des Radblocks gesehen entlang einer Linie II-II in Fig. 1;
- Fig. 3: eine Schnittansicht durch eine Variante eines bei dem Radblock der Fig. 1 und 2 verwendbaren Laufrads;
- Fig. 4: eine teilweise aufgebrochene Stirnansicht einer Variante eines insbesondere für einen Stirnanschluß geeigneten Radblocks gemäß Fig. 1 mit daran angebrachtem Antriebsmotor und
- Fig. 5: eine teilweise aufgebrochene Draufsicht auf den Radblock nach Fig. 4.

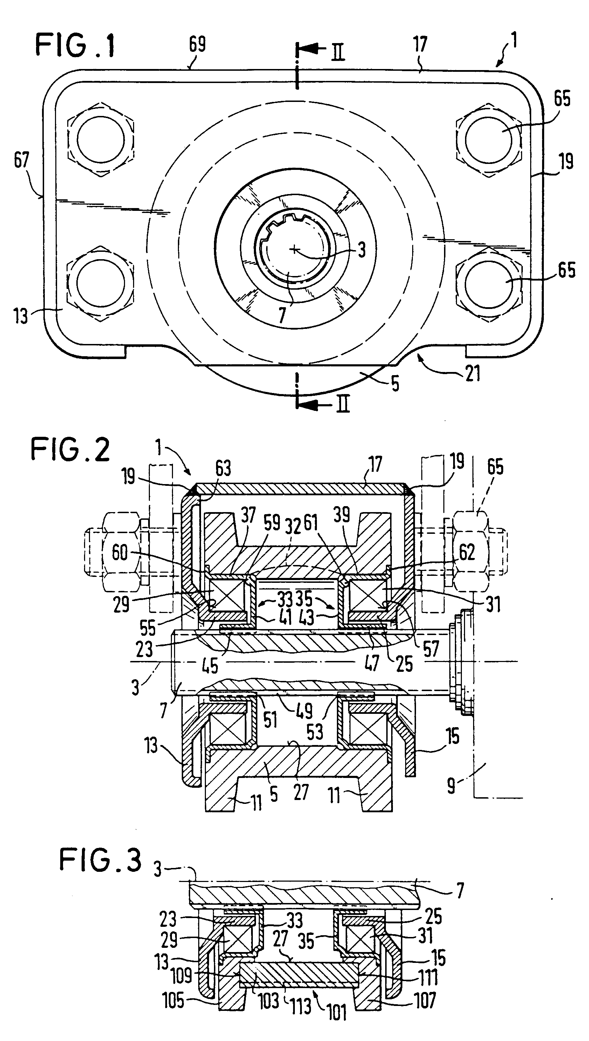

Die Fig. 1 und 2 zeigen einen Antriebs-Radblock für ein zum Beispiel für einen Kran geeignetes Fahrwerk oder dergleichen mit einem rechteck-quaderförmigen Gehäuse 1, in welchem ein um eine Drehachse 3 drehbar gelagertes Laufrad 5 angeordnet ist. Das Laufrad 5 ist mit einer Abtriebswelle 7 eines nicht näher dargestellten Laufradantriebs 9 gekuppelt und hat zur Führung auf einer nicht näher dargestellten Laufschiene an seinen Stirnseiten Spurkränze 11.

Das Gehäuse 1 ist aus zwei im wesentlichen rechteckförmigen Seitenwandscheiben 13, 15 und einem im wesentlichen U-förmigen Umfangswandteil 17 zusammengesetzt, welches entlang seiner Längsränder durch Schweißnähte 19 mit den Rändern der Seitenwandscheiben 13, 15 fest verbunden ist. Das Umfangswandteil 17 besteht zur Erhöhung der Festigkeit des Gehäuses 1 aus einem vorzugsweise dickeren Blech als die Seitenwandscheiben 13, 15 und greift unter Belassung einer Austrittsöffnung 21 für das Laufrad 5 auf zumindest einer Stirnseite des Gehäuses 1 um die stirnseitigen Ecken der Seitenwandscheiben 13, 15 herum, wobei der umgreifende Teil des Umfangswandteils 17 auch an den unteren Rändern der Seitenwandscheiben 13, 15 angeschweißt ist.

An den Seitenwandscheiben 13, 15 sind in das Gehäuseinnere ragende ringzylindrische Lageransätze 23, 25 einteilig angeformt, die in eine axial durchgehende, zumindest im Bereich ihrer Enden zylindrische Lageröffnung 27 des Laufrads 5 eingreifen. Das Laufrad 5 umschließt damit die Lageransätze, 23, 25 und ist über Wälzlager 29, 31 an den Lageransätzen der Seitenwandscheiben 13, 15 sowohl radial als auch axial geführt. Zur Vereinfachung seiner Herstellung kann die Lageröffnung 27 zwischen den Wälzlagern 29, 31 nach radial außen hin eingezogen sein, wie dies bei 32 angedeutet ist.

Die Wälzlager 29, 31 sitzen mit ihrem Außenring in als Blechformteil ausgebildeten Ringschalen 33, 35. Die Ringschalen 33, 35 haben einen reibschlüssig in der Nabenöffnung 27 des Laufrads 5 sitzenden, rohrzylindrischen Hülsenabschnitt 37 bzw. 39, von dem axial zwischen den Wälzlagern 29, 31 ein ringscheibenförmiger Flanschabschnitt 41 bzw. 43 nach radial innen absteht. Von den Flanschabschnitten 41, 43 stehen weitere Hülsenabschnitte 45 bzw. 47 gleichsinnig zu den Hülsenabschnitten 43 bzw. 39 ab. Die Hülsenabschnitte 45, 47 sind zur Bildung einer in eine Außenverzahnung 49 der Antriebswelle 7 drehfest eingreifenden Innenverzahnung 51 bzw. 53 in Umfangsrichtung gewellt und übertragen das Antriebsdrehmoment der Antriebswelle 7 auf das Laufrad 5. Um einen vergleichsweise großen axialen Abstand zwischen den Innenverzahnungen 51, 53 der beiden Ringschalen 33, 35 zu erzielen, greifen die Hülsenabschnitte 45, 47 in die Lageransätze 23, 25 ein.

Das Laufrad 5 wird über die Wälzlager 29, 31 an dem Gehäuse 1 radial fixiert. Im Fußbereich der Lageransätze 23, 25 sind hierzu an den Innenringen der Wälzlager 29, 31 anliegende, nach innen aufeinander zu weisende Ringschultern 55 bzw. 57 angeformt. Entgegengerichtete Ringschultern 59 bzw. 61 sind an den Kehlbereichen am Übergang der Hülsenabschnitte 37, 39 in die Flanschabschnitte 41, 43 in Form von Ringtreppen an den Ringschalen 33, 35 angeformt. Die Ringtreppen sorgen zugleich für ausreichenden Freiabstand zwischen den innenliegenden Enden der Lageransätze 23, 25 von den Flanschabschnitten 41, 43. Die Ringschalen 33, 35 stützen sich jeweils mit einem Ringbund 60 bzw. 62 an den axialen Stirnseiten des Laufrads 5 ab. Der Ringbund 60 bzw. 62 ist an dem vom Flanschabschnitt 41 bzw. 43 abgewandten Stirnende des Hülsenabschnitts 37 bzw. 39 nach radial außen abgebogen.

Der Radblock besteht aus einigen wenigen, einfach insbesondere als Blechformteil herstellbaren Bauteilen. Axiale Toleranzen der Laufradlagerung können beim Zusammenbau des Gehäuses 1 ausgeglichen werden. Wenigstens eine der beiden Seitenwandscheiben 13, 15, vorzugsweise jedoch beide, haben, wie in Fig. 2 dargestellt ist, einen umlaufend in das Gehäuseinnere gebogenen Rand 63, der mit der Flachseite des Umfangswandteils 17 überlappt. Der abgebogene Rand 63 steift einerseits die Seitenwandscheibe aus, erlaubt aber andererseits auch die axiale Justierung der Seitenwandscheiben 13, 15 relativ zueinander und damit beim Zusammenbau einen Ausgleich des axialen Lagerspiels.

Die Befestigung des Radblocks kann, wie dies bei 65 angedeutet ist, durch mehrere Schraubbolzen erfolgen die sich in nicht näher dargestellten Stützrohren quer durch die Seitenwandscheiben 13, 15 erstrecken. Insbesondere in Ausführungsformen, bei welchen das Umfangswandteil 17 aus einem dickeren Blech gefertigt ist als die Seitenwandscheiben 13, 15, läßt sich der Radblock jedoch auch an einer Stirnseite 67 oder einer Längsseite 69 unmittelbar über das Umfangswandteil 17 befestigen.

Der zwischen den Hülsenabschnitten 37, 39 der Ringschalen 33, 35 und dem Laufrad 5 vorgesehene Reibschluß ist so bemessen, daß das von den Ringschalen 33, 35 auf das Laufrad 5 übertragbare Drehmoment kleiner ist, als das durch die Reibung des Laufrads 5 auf die Laufschiene übertragene Drehmoment. Insbesondere bei einem Antrieb 9 mit schnellaufendem Motor kann die Situation eintreten, daß der Motor beim Auffahren des Fahrwerks auf einem Endanschlagspuffer nicht rasch genug abgebremst werden kann. Aufgrund des Rutschkupplungseffekts werden Schäden an den Antriebsorganen des Antriebs 9 verhindert. Der Rutschkupplungseffekt tritt auch bei gleichen Reibpaarungen zwischen Laufrad und Schiene einerseits und Laufrad und Ringschalen andererseits auf, da der Durchmesser der Ringschalen kleiner ist als der Laufflächendurchmesser des Laufrads 5. Für die Erzeugung des Reibmoments zwischen den Ringschalen 33, 35 und dem Laufrad 5 genügt unter Umständen die durch die Belastung durch die Radkraft erzeugte Reibkraft, so daß die Ringschalen 33, 35 im unbelasteten Zustand auch lose in der Lageröffnung 27 des Laufrads 5 sitzen können.

Fig. 3 zeigt eine Variante eines in dem Radblock der Fig. 1 und 2 verwendbaren Laufrads 101, das sich von dem Laufrad 5 der Fig. 1 und 2 durch verbesserte Laufeigenschaften unterscheidet. Das Laufrad 101 ist aus einem Zylinderrohrabschnitt 103 und zwei an die Stirnenden des Zylinderrohrabschnitts 103 anschließenden Ringscheiben 105, 107 zusammengesetzt. Die Stirnenden des Zylinderrohrabschnitts 103 greifen in Ringnuten 109 bzw. 111 an den Seitenflächen der Ringscheiben 105, 107 ein, wobei die Ringscheiben 105, 107 radial außen über den Zylinderrohrabschnitt 103 überstehen und Spurkränze des Laufrads 101 bilden. Die Ringscheiben 105, 107 sind an dem Zylinderrohrabschnitt 103 angeklebt, angeschweißt oder beispielsweise durch Schrauben angespannt.

Während die Ringscheiben 105, 107 aus vorzugsweise gehärtetem Stahl bestehen, besteht der Zylinderrohrabschnitt 103 aus einem Material mit Notlaufeigenschaften, zum Beispiel Kugelgraphitguß (GGG-60). Die Notlaufeigenschaften dieses Materials mindern den bei eventuellen Schräglauffehlern des Kranfahrwerks auftretenden Verschleiß.

Alternativ kann der Zylinderrohrabschnitt auch aus einem Material ohne ausgeprägte Notlaufeigenschaften bestehen und auf seiner Lauffläche mit einem Material mit Notlaufeigenschaften beschichtet sein. Beispielsweise kann, wie in Fig. 3 bei 113 angedeutet ist, der Außenumfang des Zylinderrohrabschnitts 103 mit einem Kunststoffmantel ummantelt sein. Der Kunststoffmantel kann aus Polyamid mit einem Gehalt MoS₂ bestehen und hat den zusätzlichen Vorteil, daß er Fahrgeräusche mindert.

Nicht näher dargestellt ist eine Variante des Laufrads 101, bei welcher die Ringschalen 33, 35 jeweils integral an den Ringscheiben 105, 107 angeformt sind. Die Hülsenabschnitte 37, 39 der Ausführungsform nach Fig. 2 sind hierbei integraler Bestandteil der Ringscheiben 105, 107. Diese Variante hat insbesondere fertigungstechnische Vorteile, da die Ringscheiben 105, 107 ohnehin gesondert von dem Zylinderrohrabschnitt 103 gefertigt werden müssen.

Das Laufrad 101 kann auch bei anderen Radblöcken, Krankopfträgern und Fahrwerken als dem Radblock der Fig. 1 und 2 eingesetzt werden, insbesondere auch bei nicht angetriebenen Radblöcken.

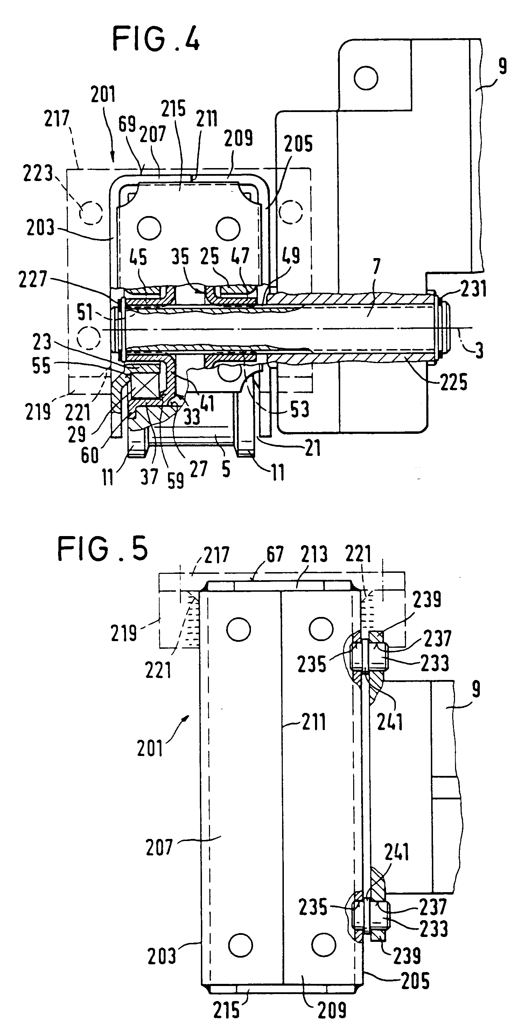

Die im folgenden anhand der Fig. 4 und 5 erläuterte Variante eines Radblocks unterscheidet sich in erster Linie durch die Konstruktion seines Gehäuses 201 von dem Radblock der Fig. 1 und 2. Das Laufrad, seine Lagerung in dem Gehäuse und seine Antriebsverbindung zur Antriebswelle entsprechen der Konstruktion der Fig. 1 und 2, so daß für diese Teile die Bezugszahlen der Fig. 1 und 2 Verwendung finden und zur Erläuterung auf die Beschreibung der Fig. 1 und 2 Bezug genommen wird. Insbesondere stimmen die Komponenten 3 bis 11, 21 bis 62, 67 und 69 überein, wobei die Komponenten 31, 39, 43, 57, 61 und 62 vorhanden, jedoch nicht dargestellt sind.

Das Gehäuse 201 besteht aus zwei axial beiderseits des Laufrads 5 angeordneten Seitenwandteilen 203, 205, die oberhalb des Laufrads 5 mit Abwinkelungen 207, 209 versehen sind. Die Abwinkelungen 207, 209 bilden die Oberseite 69 und sind entlang ihrer Längsränder bei 211 miteinander verschweißt. Die Stirnseiten des Gehäuses 201 sind durch Stirnwandteile 213, 215 zu einem steifen Kasten verbunden.

Die einzelnen Wandteile des Gehäuses 201 sind aus Blech geformt, dessen Blechstärke entsprechend den Konstruktionsanforderungen und der Anbringungsart des Radblocks am Fahrwerk des Krans dimensioniert werden können. Der Radblock eignet sich ohne Konstruktionsänderungen für die Befestigung an jeder seiner Seiten. Er eignet sich insbesondere auch für eine fliegende stirnseitige Anbringung, speziell dann, wenn, wie in den Fig. 4 und 5 durch eine gestrichelte Linie angedeutet ist, das Stirnwandteil 213 durch ein winkelförmiges Stirnwandteil 217 ersetzt ist, das mit einer Abwinkelung 219 unter den unteren Längsrand der Seitenwandteile 203, 205 greift und hier durch Schweißnähte 221 angeschweißt ist. Die Abwinkelung 219 verbessert die Ableitung der von den Seitenwandteilen 203, 205 ausgeübten Zugkräfte in das Stirnwandteil 217 und damit in die Tragkonstruktion des Krans. Das Stirnwandteil 217 steht in Richtung der Drehachse 3 beiderseits über die Seitenwandteile 203, 205 vor und ist in diesem vorstehenden Bereich mit Löchern 223 für die Befestigung an der Krankonstruktion versehen.

Der Antriebsmotor 9 ist als Getriebemotor ausgebildet und hat eine mit einer nicht näher dargestellten Innenverzahnung versehene Abtriebs-Hohlwelle 225, in die die Welle 7 drehfest eingreift. Der Antriebsmotor 9 ist ausschließlich über das Gehäuse 201 mit der Tragkonstruktion des Krans verbunden und wird ausschließlich durch die Welle 7 an dem Radblock axial fixiert. Die Welle 7 durchsetzt sowohl die Hohlwelle 225 des Antriebsmotors 9 als auch die Lagerschalen 33, 35 und trägt im Bereich ihrer beiden Enden Spreng-oder Seegerringe 227, 231, die den Radblock und die Hohlwelle 225 des Antriebsmotors 9 zwischen sich halten.

Die Drehmomentstütze des Antriebsmotors 9 wird durch zwei zur Welle 7 achsparallele Steckzapfen 233 gebildet, die in axial zueinander fluchtenden, paßgenauen Bohrungen 235, 237 des dem Antriebsmotor 9 benachbarten Seitenwandteils 205 einerseits und gegenüberliegenden Flanschwänden 239 des Antriebsmotors 9 andererseits eingesteckt sitzen. Jeder Steckzapfen 233 hat zwischen dem Seitenwandteil 205 und der dazu benachbarten Flanschwand 239 einen Ringbund 241 zur axialen Fixierung.

Bei einer Befestigung der vorstehenden Art kann der Antriebsmotor 9 problemlos auf den Radblock aufgesteckt und von diesem abgenommen werden. Für die Montage und Demontage muß lediglich einer der beiden Sicherungsringe 227, 231 aufgesetzt bzw. gelöst werden. Um Fluchtungsfehler der Bohrungen 235, 237 besser ausgleichen zu können, können diese gegebenenfalls mit nicht näher dargestellten gummielastischen Manschetten ausgekleidet sein. Es versteht sich, daß diese Art der Anbringung des Antriebsmotors 9 auch bei dem Radblock der Fig. 1 und 2 angewandt werden kann.

In den vorstehend erläuterten Ausführungsformen sind die Lagerschalen 33, 35 als Blechformteile ausgebildet. Die Lagerschalen 33, 35 können, insbesondere bei größeren Radblöcken auch aus Sphärogußteilen oder aus Gesenkschmiedeteilen bestehen.

## Patentansprüche

1. Radblock mit einem aus mehreren fest miteinander verbundenen, insbesondere verschweißten Blechformteilen (13, 15, 17) zusammengesetzten Gehäuse (1), dessen einander gegenüberliegende Seitenwände (13, 15) in das Gehäuseinnere vorstehende, ringzylindrische Lageransätze (23, 25) bilden und mit einem die Lageransätze (23, 25) axial überlappenden, über Wälzlager (29, 31) an den Lageransätzen (23, 25) drehbar gelagerten Laufrad (5; 101), welches über die Wälzlager (29, 31) in dem Gehäuse (1) axial fixiert ist, **dadurch gekennzeichnet,** daß die Wälzlager (29, 31) in einer axial durchgehenden Nabenöffnung (27) des Laufrads (5; 101) sitzen und die Lageransätze (23, 25) von außen umschließen, daß zur axialen Fixierung des Laufrads (5; 101) die Lageransätze (23, 25) mit aufeinander zu weisenden Ringschultern (55, 57) und das Laufrad (5; 101) mit voneinander weg weisenden Ringschultern (59, 61) versehen ist und daß das Gehäuse (1) aus zwei mit den Lageransätzen (23, 25) versehenen Seitenwandscheiben (13, 15) und einem im wesentlichen U-förmigen Umfangswandteil (17) zusammengesetzt ist, welches entlang seiner Längsränder mit den Rändern der Seitenwandscheiben (13, 15) verbunden ist.

2. Radblock nach Anspruch 1, dadurch gekennzeichnet, daß zumindest eine der Seitenwandscheiben (13) zum Umfangswandteil (17) umgebogene und mit der Flachseite des Umfangswandteils (17) überlappende Ränder (63) hat.

3. Radblock nach Anspruch 1 oder 2, dadurch gekennzeichnet, daß das Umfangswandteil (17) aus einem dickeren Blechmaterial besteht als die Seitenwandscheiben (13, 15).

4. Radblock nach einem der Ansprüche 1 bis 3, dadurch gekennzeichnet, daß die Seitenwandscheiben (13, 15) im wesentlichen rechtwinklig-viereckige Form haben und daß das Umfangswandteil (17) um alle vier Ecken der Seitenwandscheiben herumgreift.

5. Radblock mit einem aus mehreren fest miteinander verbundenen, insbesondere verschweißten Blechformteilen (203, 205, 213, 215, 217) zusammengesetzten Gehäuse (201), dessen einander gegenüberliegende Seitenwände (203, 205) in das Gehäuseinnere vorstehende, ringzylindrische Lageransätze (23, 25) bilden und mit einem die Lageransätze (23, 25) axial überlappenden, über Wälzlager (29, 31) an den Lageransätzen (23, 25) drehbar gelegerten Laufrad (5), welches über die Wälzlager (29, 31) in dem Gehäuse (201) axial fixiert ist,
**dadurch gekennzeichnet,** daß die Wälzlager (29, 31) in einer axial durchgehenden Nabenöffnung (27) des Laufrads (5) sitzen und die Lageransätze (23, 25) von außen umschließen, daß zur axialen Fixierung des Laufrads (5) die Lageransätze (23, 25) mit aufeinander zu weisenden Ringschultern (55, 57) und das Laufrad (5) mit voneinander weg weisenden Ringschultern (59, 61) versehen ist, und daß das Gehäuse (201) aus zwei mit den Lageransätzen (23, 25) versehenen Seitenwandteilen (203, 205) und zwei die Seitenwandteile (203, 205) entlang deren Hochränder miteinander verbindenden Stirnwandteilen (213, 215, 217) besteht, wobei die Seitenwandteile (203, 205) sich gegenüberliegende, über das Laufrad (5) greifende Abwinkelungen (207, 209) aufweisen und längs der Abwinkelungen (207, 209) miteinander verbunden sind.

6. Radblock nach Anspruch 5, dadurch gekennzeichnet, daß zumindest eines der Stirnwandteile (217) eine unter die Seitenwandteile (203, 205) greifende Abwinkelung (219) aufweist, die mit den unteren Längsrändern der Seitenwandteile (203, 205) verbunden, insbesondere verschweißt ist.

7. Radblock nach Anspruch 6, dadurch gekennzeichnet, daß das mit der Abwinkelung (219) versehene Stirnwandteil (217) axial beiderseits des Laufrads (5) über die Seitenwandteile (203, 205) vorsteht und in den vorstehenden Bereichen Löcher für Befestigungsorgane (223) aufweist.

8. Antriebsanordnung bestehend aus einem Motor (9), insbesondere einem Getriebsmotor, und einem Radblock, mit einem Gehäuse (201) und einem in dem Gehäuse (201) über Wälzlager (29, 31) drehbar gelagerten Laufrad (5), welches über die Wälzlager (29, 31) in dem Gehäuse (201) axial fixiert und über eine Welle (7) drehfest mit dem Motor (9) gekuppelt ist, nach einem der Ansprüche 1 bis 7,
**dadurch gekennzeichnet,** daß der Motor (9) relativ zum Radblock ausschließlich über die Welle (7) axial fixiert ist und daß der Motor (9) und das Gehäuse (201) in Achsrichtung der Welle (7) einander benachbarte Wände (205, 239) haben, von denen wenigstens eine Wand (205, 239) mit zumindest einer Öffnung (235, 237) versehen ist, in die ein zur Welle (7) achsparalleler, an der jeweils anderen Wand (205, 239) gehaltener Steckzpafen (233) zur Bildung einer Drehmomentstütze des Motors (9) eingreift.

9. Antriebsanordnung nach Anspruch 8, dadurch gekennzeichnet, daß die sich gegenüberliegenden Wände (205, 239) wenigstens ein Paar axial fluchtender Öffnungen (235, 237) haben und daß der Steckzapfen (233) in beide Öffnungen (235, 237) eingesteckt ist und zwischen den Wänden (205, 239) eine radiale Erweiterung (241), insbesondere einen Ringbund für seine axiale Fixierung hat.

10. Antriebsanordnung nach Anspruch 8 oder 9, dadurch gekennzeichnet, daß die Welle (7) zwei Sprengringe (227, 231) im Abstand voneinander trägt, die sowohl den Motor (9) als auch den Radblock axial zwischen sich fixieren.

## Claims

1. A wheel block with a housing (1) assembled from a plurality of sheet-metal shaped parts (13, 15, 17) which are securely connected with one another, in particular welded, and the mutually opposite side walls (13, 15) of which form annular cylindrical bearing extensions (23, 25) projecting into the housing interior, and with a bogie wheel (5; 101) axially overlapping the bearing extensions (23, 25) and rotatably mounted on the bearing extensions (23, 25) via rolling bearings (29, 31), which bogie wheel is axially secured in the housing (1) via the rolling bearings (29, 31), characterised in that the rolling bearings (29, 31) are seated in an axially continuous hub opening (27) of the bogie wheel (5; 101) and outwardly enclose the bearing extensions (23, 25), in that for the axial location of the bogie wheel (5; 101) the bearing extensions (23, 25) are provided with mutually facing annular shoulders (55, 57) and the bogie wheel (5, 101) is provided with annular shoulders (59, 61) facing away from one another, and in that the housing (1) is assembled from two side wall plates (13, 15) provided with the bearing extensions (23, 25) and from a substantially U-shaped peripheral wall part (17) which along its longitudinal edges is provided with the edges of the side wall plates (13, 15).

2. A wheel block according to Claim 1, characterised in that at least one of the side wall plates (13) has edges (63) which are bent over towards the peripheral wall part (17) and which overlap with the flat side of the peripheral wall part (17).

3. A wheel block according to Claim 1 or 2, characterised in that the peripheral wall part (17) consists of a thicker sheet material than the side wall plates (13, 15).

4. A wheel block according to any one of Claims 1 to 3, characterised in that the side wall plates (13, 15) are of substantially rectangular-square shape, and in that the peripheral wall part (17) embraces all four corners of the side wall plates.

5. A wheel block with a housing (201) assembled from a plurality of sheet-metal shaped parts (203, 205, 213, 215, 217) which are securely connected with one another, in particular welded, and the mutually opposite side walls (203, 205) of which form annular cylindrical bearing extensions (23, 25) projecting into the housing interior, and with a bogie wheel (5) axially overlapping the bearing extensions (23, 25) and rotatably mounted on the bearing extensions (23, 25) via rolling bearings (29, 31), which bogie wheel is axially secured in the housing (201) via the rolling bearings (29, 31), characterised in that the rolling bearings (29, 31) are seated in an axially continuous hub opening (27) of the bogie wheel (5) and outwardly enclose the bearing extensions (23, 25), in that for the axial location of the bogie wheel (5) the bearing extensions (23, 25) are provided with mutually facing annular shoulders (55, 57) and the bogie wheel (5) is provided with annular shoulders (59, 61) facing away from one another, and in that the housing (201) comprises two side wall parts (203, 205) provided with the bearing extensions (23, 25) and two end wall parts (213, 215, 217) connecting together the side wall parts (203, 205) along their top edges, wherein the side wall parts (203, 205) have opposing bent portions (207, 209) engaging over the bogie wheel (5) and are connected with one another along the bent portions (207, 209).

6. A wheel block according to Claim 5, characterised in that at least one of the end wall parts (217) has a bent portion (219) which engages under the side wall parts (203, 205) and which is connected, in particular welded, to the lower longitudinal edges of the side wall parts (203, 205).

7. A wheel block according to any one of Claim 6, characterised in that the end wall part (217) provided with the bent portion (219) projects axially on either side of the bogie wheel (5) over the side wall parts (203, 205) and in the projecting portions has holes for fastening members (223).

8. A drive assembly comprising a motor (9), in particular a geared motor, and a wheel block, with a housing (201) and with a bogie wheel (5) which is rotatably mounted in the housing (201) via rolling bearings (29, 31), which is axially secured via the rolling bearings (29, 31) in the housing (201) and which is coupled via a shaft (7) with the motor (9) in a manner precluding relative rotation, according to any one of Claims 1 to 7, characterised in that the motor (9) is secured axially relative to the wheel block exclusively via the shaft (7), and in that in the axial direction of the shaft (7) the motor (9) and the housing (201) have mutually adjacent walls (205, 239), at least one wall (205, 239) of which is provided with at least one opening (235, 237), in which engages an insert journal (233), which is axially parallel to the shaft (7) and which is retained on the respective other wall (205, 239), so as to form a torque support of the motor (9).

9. A drive assembly according to Claim 8, characterised in that the opposing walls (205, 239) have at least one pair of axially aligned openings (235, 237), and in that the insert journal (233) is inserted in both openings (235, 237) and between the walls (205, 239) it has a radial widening (241), in particular a collar for its axial fastening.

10. A drive assembly according to Claim 8 or 9, characterised in that the shaft (7) is provided with two circlips (227, 231) which are spaced apart and which locate both the motor (9) and the wheel block axially between them.

## Revendications

1. Bloc de roue comportant un boîtier (1) constitué de plusieurs pièces préformées en tôle (13, 15, 17) assemblées fixement entre elles, en particulier soudées, dont les parois latérales (13, 15) opposées l'une à l'autre forment des garnitures de palier (23, 25) cylindriques annulaires, faisant saillie à l'intérieur du boîtier et comportant une roue (5 ; 101) recouvrant axialement les garnitures de palier (23, 25), montée tournante par des paliers de roulement (29, 31) sur les garnitures de palier (23, 25), laquelle roue est fixée axialement dans le boîtier (1), par les paliers de roulement (29, 31), caractérisé en ce que les paliers de roulement (29, 31) sont placés dans une ouverture de moyeu (27) traversant axialement la roue (5 ; 101) et entourent de l'extérieur les garnitures de palier (23, 25), en ce que pour la fixation axiale de la roue (5 ; 101), les garnitures de palier (23, 25) sont pourvus d'épaulements annulaires (55, 57), dirigés l'un vers l'autre et la roue (5 ; 101) est pourvue d'épaulements annulaires (59, 61), dirigés en sens contraire l'un de l'autre et en ce que le boîtier (1) est constitué de deux flasques latéraux (13, 15) pourvus des garnitures de palier (23, 25) et d'une partie de paroi périphérique (17), sensiblement en forme de U, qui est reliée, le long de ses bords longitudinaux, avec les bords des flasques latéraux (13, 15).

2. Bloc de roue selon la revendication 1, caractérisé en ce qu'au moins l'un des flasques latéraux (13) possède des bords (63) repliés vers la partie de paroi périphérique (17) et recouvrant le côté plat de la partie de paroi périphérique (17).

3. Bloc de roue selon l'une des revendications 1 ou 2, caractérisé en ce que la partie de paroi périphérique (17) est réalisée dans une tôle plus épaisse que les flasques latéraux (13, 15).

4. Bloc de roue selon l'une des revendications 1 à 3, caractérisé en ce que les flasques latéraux (13, 15) ont sensiblement la forme d'un rectangle et en ce que la partie de paroi périphérique (17) passe autour des quatre angles des flasques latéraux.

5. Bloc de roue comportant un boitier (201), constitué de plusieurs pièces préformées en tôle (203, 205, 213, 215, 217), fixement assemblées entre elles, en particulier soudées, dont les parois latérales (203, 205) opposées l'une à l'autre forment des garnitures de palier (23, 25) cylindriques annulaires, faisant saillie à l'intérieur du boitier et comportant une roue (5) recouvrant axialement les garnitures de palier (23, 25), montée tournante par des paliers de roulement (29, 31) sur les garnitures de palier (23, 25), laquelle roue est fixée axialement dans le boîtier (201), par les paliers de roulement (29, 31), caractérisé en ce que les paliers de roulement (29, 31) sont placés dans une ouverture de moyeu (27) traversant axialement la roue (5) et entourent de l'extérieur les garnitures de palier (23, 25), en ce que pour la fixation axiale de la roue (5 ; 101), les garnitures de palier (23, 25) sont pourvus d'épaulements annulaires (55, 57), dirigés l'un vers l'autre et la roue (5) est pourvue d'épaulements annulaires (59, 61), dirigés en sens contraire l'un de l'autre et en ce que le boîtier (201) est constitué de deux parties de paroi latérales (203, 205) pourvues des garnitures de palier (23, 25) et de deux parties de paroi frontales (213, 215, 217) reliant entre elles les parties de paroi latérales (203, 205) le long de leurs bords verticaux, les parties de paroi latérales (203, 205) présentant des parties coudées (207, 209) opposées l'une à l'autre, passant sur la roue (5) et étant reliées entre elles le long des parties coudées (207, 209).

6. Bloc de roue selon la revendication 5, caractérisé en ce que l'une au moins des parties de paroi frontales (217) présente une partie coudée (219), passant sous les parties de paroi latérales (203, 205), qui est reliée, en particulier soudée, avec les bords longitudinaux inférieurs des parties de paroi latérales (203, 205).

7. Bloc de roue selon la revendication 6, caractérisé en ce que la partie de paroi frontale (217), pourvue de la partie coudée (219), dépasse axialement de part et d'autre de la roue (5), des parties de paroi latérales (203, 205) et présente, dans les zones saillantes, des trous pour des organes de fixation (223).

8. Dispositif d'entraînement constitué d'un moteur (9), en particulier d'un motoréducteur, et d'un bloc de roue, avec un boîtier (201) et une roue (5) montée tournante dans le boîtier (201), par l'intermédiaire de paliers de roulement (29, 31), laquelle roue est fixée axialement dans le boîtier (201) par l'intermédiaire des paliers de roulement (29, 31) et est accouplée solidaire en rotation avec le moteur (9), par un arbre (7), selon l'une des revendications 1 à 7, caractérisé en ce que le moteur (9) est fixé axialement par rapport au bloc roue, exclusivement par l'arbre (7) et en ce que le moteur (9) et le boîtier (201) possèdent, dans la direction axiale de l'arbre (7), des parois (205, 239) voisines l'une de l'autre, dont une paroi (205, 239) au moins est pourvue d'au moins une ouverture (235, 237), dans laquelle s'engage un pivot d'emboîtement (233) d'axe parallèle à l'axe (7), sur lequel est maintenue l'autre paroi (205, 239), afin de former un appui résistant au couple de rotation du moteur (9).

9. Dispositif d'entraînement selon la revendication 8, caractérisé en ce que les parois (205, 239), opposées l'une à l'autre, possèdent au moins une paire d'ouvertures (235, 237) alignées axialement et en ce que le pivot d'emboîtement (233) est introduit dans les deux ouvertures (235, 237) et possède, entre les deux parois (205, 239), un élargissement (241) radial, en particulier un épaulement annulaire pour sa fixation axiale.

10. Dispositif d'entraînement selon la revendication 8 ou 9, caractérisé en ce que l'arbre (7) porte deux joncs (227, 231) espacés l'un de l'autre, qui fixent entre eux axialement le moteur (9) et le bloc de roue.
